# EUROPÄISCHE PATENTSCHRIFT

(11) **EP 1 242 489 B1**
(45) Veröffentlichungstag und Bekanntmachung des Hinweises auf die Patenterteilung: **21.04.2004**
(21) Anmeldenummer: 00979613.7
(22) Anmeldetag: 21.11.2000
(51) Int. Cl.: C08F 290/06, C08F 220/28, C08F 2/06, C04B 24/26

(54) **VERFAHREN ZUR HERSTELLUNG VON WASSERLÖSLICHEN POLYMERISATEN, DIE POLYALKYLENGLYKOLETHER-SEITENKETTEN ENTHALTEN**
METHOD FOR PRODUCING WATER-SOLUBLE POLYMERS CONTAINING POLYALKENE GLYCOL ETHER SIDE CHAINS
PROCEDE DE PREPARATION DE POLYMERISATS SOLUBLES DANS L'EAU, CONTENANT DES CHAINES LATERALES DE POLYALKYLENE-GLYCOLETHER

(30) Priorität: 03.12.1999 DE 19958447
(43) Veröffentlichungstag der Anmeldung: 25.09.2002
(73) Patentinhaber: BASF AKTIENGESELLSCHAFT, 67056 Ludwigshafen (DE)
(72) Erfinder: KRONER, Matthias, 67304 Eisenberg (DE); BÜCHNER, Karl-Heinz, 68804 Altlussheim (DE); PERNER, Johannes, 67434 Neustadt (DE)
(86) Internationale Anmeldenummer: PCT/EP2000/011579
(87) Internationale Veröffentlichungsnummer: WO 2001/040338

(56) Entgegenhaltungen:
- EP-A- 0 353 844
- EP-A- 0 567 214
- EP-A- 0 753 488
- US-A- 5 712 359

## Beschreibung

Die Erfindung betrifft ein Verfahren zur Herstellung von wasserlöslichen Polymerisaten, die Polyalkylenglykolether-Seitenketten enthalten und Molmassen von 15.000 bis 60.000 haben, durch Lösungspolymerisation von Estern aus ethylenisch ungesättigten Carbonsäuren und einseitig endgruppenverschlossenen Polyalkylenglykolen, gegebenenfalls zusammen mit anderen Monomeren in mindestens einem Kohlenwasserstoff, in Gegenwart von Radikale bildenden Polymerisationsinitiatoren und gegebenenfalls Polymerisationsreglern bei Temperaturen bis zu 200°C, Entfernen des Lösemittels nach der Polymerisation und Lösen der Polymerisate in Wasser zu 50 bis 80 gew.-%igen Lösungen, wobei man Säuregruppen enthaltende Polymerisate gegebenenfalls neutralisiert.

In der DE-A-19 653 524 wird die Herstellung von Copolymerisaten aus Methylpolyethylenglykolmethacrylaten und Methacrylsäure durch Polymerisieren in wäßrigen Medium mit wasserlöslichen Initiatoren und wasserlöslichen Reglern beschrieben. Die Konzentrationen bei der Polymerisation betragen ca. 20 Gew.-%. Erhöht man die Feststoffkonzentration bei der Polymerisation, so bilden sich Polymerisate mit einer sehr hohen Uneinheitlichkeit und einem großen Anteil an hochmolekularen Polymeren. Solche Produkte sind als Dispergiermittel unwirksam.

Ester aus ethylenisch ungesättigten Carbonsäuren und einseitig endgruppenverschlossenen Polyalkylenglykolen können auch durch Substanzpolymerisation oder durch Lösungspolymerisation in einem aliphatischen oder aromatischen Kohlenwasserstoff hergestellt werden, vgl. EP-A-753 488. Das Polymerisieren in wäßrigem Medium, wobei man etwa 25 %ige wäßrige Polymerlösungen erhält, ist jedoch bevorzugt, weil dabei besonders wirksame Dispergiermittel entstehen, die Polyalkylenglykolether-Seitenketten enthalten. Führt man die Polymerisation der Ester aus ethylenisch ungesättigten Carbonsäuren und einseitig endgruppenverschlossenen Polyalkylenglykole in hoher Konzentration, z.B. bei Konzentrationen von mehr als 50 Gew.-% durch, so erhält man nur schlecht als Dispergiermittel wirksame Produkte.

Der vorliegenden Erfindung liegt daher die Aufgabe zugrunde, ein Verfahren zur Herstellung von hochkonzentrierten aber noch gut fließfähigen wäßrigen Lösungen von wasserlöslichen Polymerisaten, die Polyalkylenglykolether-Seitenketten enthalten und die als Dispergiermittel für feinteilige anorganische Stoffe wirksam sind, zur Verfügung zu stellen.

Die Aufgabe wird erfindungsgemäß gelöst mit einem Verfahren zur Herstellung von wasserlöslichen Polymerisaten, die Polyalkylenglykolether-Seitenketten enthalten und Molmassen von 15.000 bis 65.000 haben, durch Lösungspolymerisation von Estern aus ethylenisch ungesättigten Carbonsäuren und einseitig endgruppenverschlossenen Polyalkylenglykolen, gegebenenfalls zusammen mit anderen Monomeren in mindestens einem Kohlenwasserstoff in Gegenwart von Radikale bildenden Polymerisationsinitiatoren und gegebenenfalls Polymerisationsreglern bei Temperaturen bis zu 200°C, Entfernen des Lösemittels nach der Polymerisation und Lösen der Polymerisate in Wasser zu 50 bis 80 gew.-%igen Lösungen, wobei man Säuregruppen enthaltende Polymerisate gegebenenfalls neutralisiert, wenn die Konzentration der Monomeren in den Kohlenwasserstoffen 70 bis 95 Gew.-% beträgt. Vorzugsweise wird die Polymerisation bei einer Konzentration der Monomeren von 80 bis 90 Gew.-% durchgeführt.

Vorzugsweise copolymerisiert man
(a) Ester der Formel 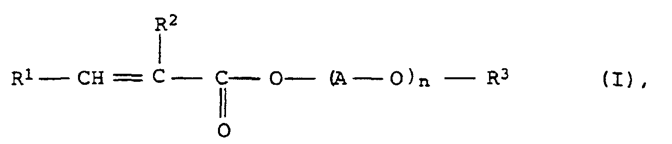 in der
   - R¹,R²: gleich oder verschieden sind und H oder CH₃ bedeuten
   - A: eine Alkylengruppe mit 2 bis 4 C-Atomen oder -CH₂-CH₂-CH₂-CH₂- ist,
   - R³: für C₁- bis C₅₀-Alkyl oder C₁- bis C₁₈-Alkylphenyl steht und
   - n: eine Zahl von 2 bis 300 ist,
   mit
(b) mindestens einer monoethylenisch ungesättigten Carbonsäure oder deren Salzen. Die Monomeren (a) und (b) werden meistens im Gewichtsverhältnis 98 : 2 bis 2 : 98 copolymerisiert.

Besonders bevorzugt ist die Copolymerisation von
(a) Acrylsäure- oder Methacrylsäureester von einseitig mit C1- bis C4-Alkyl endgruppenverschlossenen Polyalkylenglykolen mit Molmassen von 200 bis 10.000
   mit
(b) Acrylsäure und/oder Methacrylsäure.

Besonders wirksame Dispergiermittel erhält man, wenn man
(a) Ester aus Methacrylsäure und Methylpolyethylenglykol mit Molmassen von 350 bis 10.000
   mit
(b) Methacrylsäure copolymerisiert.

Die Copolymerisation erfolgt nach einer bevorzugten Ausführungsform des erfindungsgemäßen Verfahrens in Gegenwart von 0,1 bis 10 Gew.-% eines Polymerisationsreglers. Als Polymerisationsregler eignen sich z.B. Natriumhydrogensulfit, Natriumdisulfit, Natriumthiosulfat, Natriumhypophosphit, phosphorige Säure, 2-Mercaptoethanol, Dodecylmercaptan, Mercaptopropionsäure, Mercaptoessigsäure, Alkalimetallsalze der genannten Säuren oder Mischungen der Polymerisationsregler.

Als Alkylpolyalkylenglykole können z.B. Verbindungen der allgemeinen Formel

R¹-(O-CHR²-CHR³)ₙ-OH oder R¹-(O-CH₂-CH₂-CH₂-CH₂)ₙ-OH

verwendet werden, wobei
- R¹ =: C₁- bis C₅₀-Alkyl
- R², R³ =: H, Methyl oder Ethyl
- n =: 2 bis 300 ist.

Das Molgewicht der Alkylpolyalkylenglykole kann bis zu 10.000 betragen, bevorzugt ist ein Molgewicht von 200 bis 2.000. Dies entspricht bis zu 230, bevorzugt 3 bis 40 Alkylenoxideinheiten pro Molekül.

Beispiele für Alkylpolyalkylenglykole sind Methylpolyethylenglykole mit Molgewichten von 350, 500, 750, 1000, 1500, 2000, 4000 und 10.000.

Die Alkylpolyalkylenglykole können auch Propylenoxid- oder Butylenoxid-Einheiten in Kombination mit Ethylenoxid-Einheiten enthalten. Die Alkylenoxideinheiten können blockweise oder statistisch angeordnet sein.

Beispiele hierfür sind Methylpolyalkylenglykole, die durch Anlagerung von 5 Mol Ethylenoxid und 1 Mol Propylenoxid, 5 Mol Ethylenoxid und 3 Mol Propylenoxid, 5 Mol Ethylenoxid und 10 Mol Propylenoxid und 10 Mol Ethylenoxid und 1 Mol Propylenoxid, 10 Mol Ethylenoxid und 3 Mol Propylenoxid, 10 Mol Ethylenoxid und 10 Mol Propylenoxid, 20 Mol Ethylenoxid und 1 Mol Propylenoxid, 20 Mol Ethylenoxid und 3 Mol Propylenoxid, 20 Mol Ethylenoxid und 10 Mol Propylenoxid, 25 Mol Ethylenoxid und 1 Mol Propylenoxid, 25 Mol Ethylenoxid und 3 Mol Propylenoxid und 25 Mol Ethylenoxid und 10 Mol Propylenoxid an jeweils 1 Mol Methanol erhältlich sind.

Als einseitig endgruppenverschlossene Polyalkylenglykole kann man auch Polytetrahydrofurane mit Molmassen von z.B. 200 bis 10.000 einsetzen, die als Endgruppe eine C₁- bis C₄-Alkylgruppe tragen.

Als ungesättigte Carbonsäuren werden bevorzugt Acrylsäure, Methacrylsäure, Maleinsäure und Maleinsäureanhydrid eingesetzt.

Die Herstellung von Estern aus Alkylpolyalkylenglykolen und ungesättigten Carbonsäuren kann beispielsweise durch sauer katalysierte Veresterung von ungesättigten Carbonsäuren mit Alkylpolyalkylenglykolen nach allen bekannten Verfahren erfolgen. Das Reaktionswasser kann in der Mischung verbleiben oder aus der Reaktionsmischung entfernt werden, indem man es z.B. mit einem Schleppmittel azeotrop abdestilliert. So kann der Umsatz der Alkoholkomponente bis zu 100 % betragen, vgl. EP-A-0 884 290.

Bei der Veresterung kann das molare Verhältnis von Carbonsäure zu Alkylpolyalkylenglykol z.B. 10:1 bis zu 1:1 betragen.

Als Schleppmittel kommen alle organischen Lösemittel mit einem Siedepunkt zwischen 50 und 300°C in Frage. Der Anteil an Schleppmittel beträgt beispielsweise 5 bis 20 Gew-%, bezogen auf die Summe aus Carbonsäure und Alkoholkomponente. Beispiele für Schleppmittel sind n-Paraffine wie Hexan, Decan, Undecan, Dodecan, Octadecan, Iso-Paraffine wie Isooctan, Isononan, Isodecan, Isododecan, Isohexadecan, Isooctadecan, Cycloparaffine wie Cyclohexan, Methylcyclohexan, Dimethylcyclohexan, Aromaten wie Benzol, Toluol, o-, m- und p-Xylol, Xylolgemische, Trimethylbenzol, Tetramethylbenzol, Mesitylen, Ethylbenzol, Isopropylbenzol, n-Butylbenzol, Isobutylbenzol. Bevorzugt sind Cyclohexan, Toluol , Xylolgemische und o-Xylol. Besonders bevorzugt ist Cyclohexan, Methylcyclohexan, Toluol und Xylol.

Es können auch technische Mischungen aus verschiedenen Schleppmitteln verwendet werden. Solche Mischungen bewirken oft einen Siedebereich. Solche Mischungen werden auch als Spezialbenzine, Petroleumbenzin, Siedegrenzenbenzine, Naphtha oder Petrolether-Fraktionen bezeichnet. Solche Mischungen fallen oft als Raffineriefraktion an. Sie können durch Oligomerisierungen und Hydrierungen gezielt aus Steamcracker-Olefinen hergestellt werden.

Beispiele für solche Siedegrenzenbenzine sind z.B. Benzine mit den Siedebereichen zwischen 90°C und 100°C, zwischen 100°C und 140°C oder zwischen 140°C und 160°C. Es handelt sich meist um Alkangemische. Die Fraktionen können je nach Herkunft rein n-aliphatische, isoaliphatische, aliphatisch-aromatische oder rein aromatische Bestandteile enthalten.

Als Schleppmittel sind alle Kohlenwasserstoffe bzw. Kohlenwasserstoffgemische geeignet. Eine Übersicht zu den technisch zugänglichen Kohlenwasserstoffgemischen ist bspw. zu finden in Kirk-othmer, Encyclopedia of Chemical Technology, 1995, Vol. 13, Seiten 744 ff, Kapitel Hydrocarbons oder ebenda Vol. 12, Seiten 126 ff, Kapitel Fuels und Vol. 12, Seiten 341 ff. Kapitel Gasoline. Eine weitere Übersicht über Kohlenwasserstoffgemische findet sich in Ullmann's Encyclopedia of Industrial Chemistry, 1989 Vol. A 13, Seiten 227-281 im Kapitel Hydrocarbons, sowie ebenda in Vol. A 16, Seiten 719-755 in Kapitel Motor Fuels.

Die Schleppmittel bilden zusammen mit Wasser ein azeotropes Gemisch, das in der Regel einen Siedepunkt unter dem des niedriger siedenden Bestandteiles besitzt. Die Siedepunkte der azeotropen Gemische liegen z.B. besonders bevorzugt zwischen 70°C und 130°C.

Die Herstellung der Ester kann auch durch alkalisch katalysierte Umesterung von ungesättigten Carbonsäureestern mit Alkylpolyalkylenglykolen durchgeführt werden, vgl. WO-A-97/26293.

Die Herstellung von Alkylenglykolmonomethacrylaten oder - acrylaten kann bspw. auch gemäß WO-A-99/10407 durch Alkoxylierung von Acrylsäure, Methacrylsäure, Hydroxyethylacrylat , Hydroxyethylmethacrylat, Hydroxypropylmethacrylat oder Hydroxypropylacrylat mittels Komplex gebundenen Cyaniden als Katalysatoren erfolgen.

Als Initiatoren für die Polymerisation werden im Polymerisationsmedium lösliche Initiatoren verwendet. Beispiele sind organische Peroxide und Azoinitiatoren, wie bspw. Diacylperoxide, Peroxydicarbonate, Dialkylperoxide, Peroxyester, Diperoxyester, Peroxyketale, Hydroperoxide, 1,2-Diphenylalkane und Wasserstoffperoxid. Es können auch wasserlösliche Initiatoren verwendet werden. Beispiele sind Natrium-, Kalium- oder Ammoniumperoxodisulfat. Sie werden als wäßrige Lösung eingesetzt. Der Anteil an Wasser bezogen auf die Reaktionsmischung soll nicht mehr als 20 Gew.-% betragen. Vorzugsweise liegt der Wasseranteil unter 10 Gew.-%.

Die erfindungsgemäße Polymerisation wird als Lösungspolymerisation in mindestens einem Kohlenwasserstoff durchgeführt. Beispiele für Kohlenwasserstoffe sind alle obengenannten Schleppmittel. Vorzugsweise verwendet man das bei der Veresterung eingesetzte Schleppmittel als Lösemittel bei der Lösungspolymerisation. Bevorzugt verwendete Lösemittel für die Lösungspolymerisation sind Toluol, Xylol, Cyclohexanon, Methylcyclohexen und Mischungen aus aliphatischen Kohlenwasserstoffen mit Siedepunkten von 70 bis 160°C unter Normaldruck. Das erfindungsgemäße Verfahren wird vorzugsweise so durchgeführt, daß man eine Mischung aus Alkylpolyalkylenglykolester und ethylenisch ungesättigten Carbonsäuren und gleichzeitig Initiatoren und Regler bei 60 bis 200°C, bevorzugt bei 70 bis 150°C innerhalb von 1 bis 20 Stunden in einen Reaktor dosiert, in dem die Polymerisation stattfindet. Üblicherweise wird mit Stickstoff inertisiert. Nach Beendigung der Zudosierungen wird noch für 1 bis 5 Stunden nachpolymerisiert. Dann entfernt man flüchtige Anteile durch Destillation und verdünnt das Polymer mit Wasser auf Gebrauchskonzentration. Man kann jedoch auch zunächst die erforderliche Menge an Wasser zufügen, um 50 bis 80 gew.-%ige wäßrige Polymerlösungen herzustellen, und dann die bei der Lösungspolymerisation verwendeten Lösemittel azeotrop aus dem Gemisch abdestillieren. Ebenso ist es möglich, im Anschluß an die Polymerisation zunächst nur einen Teil des bei der Lösungspolymerisation eingesetzten Lösemittels abzudestillieren, dann Wasser zuzugeben und den Rest der Lösemittel azeotrop abzudestillieren.

Nach dem erfindungsgemäßen Verfahren ist es möglich, Polymerisate mit einem Molmassenbereich von 15.000 bis 65.000 in Form von 70 bis 95 gew.-%igen Lösungen in Kohlenwasserstoffen herzustellen. Das ist in der Technik von Vorteil, um eine hohe Raum-Zeit-Ausbeute von Reaktoren zu ermöglichen. Der Anteil an organischen Lösemitteln kann während der Polymerisation bis zu 30 Gew.-% betragen. Die mindestens 80 gew.-%igen Polymerisatlösungen sind bei Temperaturen über 60°C gut fließfähig und rührbar. Da sie unter 50°C eine hohe Viskosität besitzen, werden sie durch Verdünnen mit Wasser auf die Gebrauchskonzentration verdünnt, wobei man die organischen Lösemittel vor, während oder nach der Zugabe von Wasser aus der Mischung abdestilliert. Die so erhältlichen Lösungen sind dann bei Umgebungstemperatur gut zu handhaben. Die Gebrauchskonzentration der wäßrigen Lösung beträgt bevorzugt 50 bis 80 Gew.-%. Die wäßrigen 50 bis 80 gew.-%igen Polymerlösungen sind gut fließfähig, gießbar und pumpbar. Die Viskositäten liegen zwischen 500 mPas und 10.000 mPas. Ein weiterer Vorteil gegenüber dem Stand der Technik ist, daß die Polymerlösungen frei von Fremdionen sind, bspw. kein Natriumsulfat enthalten. Die Molmassen M_{w} der Polymerisate betragen 15.000 bis 65.000, vorzugsweise 20.000 bis 40.000. Die freien Säuregruppen der Polymerisate werden ggf. mit Basen neutralisiert, vorzugsweise verwendet man wäßrige Natronlauge.

Die Prozentangaben in den Beispielen bedeuten Gew.-%. Der K-Wert der Polymerisate wurde nach H. Fikentscher, Cellulose-Chemie, Bd. 13, 58-64 und 71-74 (1932) in wäßriger Lösung bei einem pH-Wert von 7, einer Temperatur von 25°C und einer Polymerkonzentration des Natriumsalzes der Copolymerisate von einem Gew.-% bestimmt.

### Beispiele

### Herstellung der Ester

### Ester 1

In einem 4-Liter fassenden Reaktor mit Dosiereinrichtungen wurden 2020 g Methylpolyethylenglykol mit einer Molmasse von 1000, 0,3 g Phenothiazin, 711 g Methacrylsäure, 140 g Toluol und 67 g p-Toluolsulfonsäure unter Durchleiten von Stickstoff für 4 Stunden auf 120°C erhitzt und das Wasser im Wasserabscheider abgetrennt. Die Säurezahl der Mischung betrug 125 mgKOH/g. Der Veresterungsgrad betrug 95 %.

### Ester 2

In einem 4-Liter fassenden Reaktor mit Dosiereinrichtungen wurden 2020 g Methylpolyethylenglykol mit einer Molmasse von 1000, 0,3 g Phenothiazin, 711 g Methacrylsäure, 25 g p-Toluolsulfonsäure und 500 g Toluol unter Durchleiten von Stickstoff für 10 Stunden auf 130°C unter Rückflußsieden erhitzt. Das Azeotrop wurde kondensiert und in einem Wasserabscheider getrennt. Das Toluol wurde aus dem Wasserabscheider in den Reaktor zurückgeleitet, während das Wasser aus dem System entfernt wurde. Nach der Veresterung verblieb das Toluol in der Reaktionsmischung. Die Säurezahl der Mischung betrug nach der Veresterung 109 mg KOH/g. Das Reaktionsgemisch enthielt 1 % unumgesetztes Methylpolyethylenglykol.

### Beispiel 1

In einem 2-Liter fassenden Reaktor wurden bei 100°C innerhalb von 4 Stunden 900 g des Esters 1 und gleichzeitig 16 g 50 %ige wäßrige hypophosphorige Säure und 43 g tert.-Butylperoctoat unter ständigem Rühren zudosiert. Nach Beendigung der Polymerisation wurde das Toluol abdestilliert, anschließend das Reaktionsgemisch abgekühlt, die Polymerschmelze mit Wasser auf einen Feststoffgehalt von 60 Gew.-% verdünnt und durch Zugabe von 50 %iger wäßriger Natronlauge auf einen pH-Wert von 6,7 eingestellt. Die Viskosität der gebrauchsfertigen Polymerlösung betrug ca. 1300 mPas bei 23°C. Das Molgewicht (Gewichtsmittel) des Copolymerisats betrug 49.000. Das Copolymerisat hatte einen K-Wert von 41.

### Beispiele 2 bis 4

Analog dem Beispiel 1 wurden gemäß folgender Tabelle Polymerisationen des Esters 1 durchgeführt. Durch Verdünnen der Polymerschmelzen mit Wasser stellte man gebrauchsfertige 60 %ige wässrige Polymerlösungen her.

**Tabelle 1**

| | 50 %ige wäßrige hypophosphorige Säure | Tert. Butylperoctoat [g] | Mw der Copolymerisate | K-Wert |
|---|---|---|---|---|
| Beispiel 2 | 32 g | 43 | 44.000 | 38 |
| Beispiel 3 | 32 g | 21 | 64.000 | 43 |
| Beispiel 4 | 48 g | 43 | 29.000 | 32 |

### Beispiel 5

In einem 2-Liter fassenden Reaktor wurden bei 100°C innerhalb 4 Stunden 900 g des Esters 2 und gleichzeitig 48 g 50 %ige wäßrige hypophosphorige Säure und 43 g tert. Butylperoctoat zudosiert. Nach Beendigung der Polymerisation wurde das Toluol im Wasserstrahlvakuum bei 100°C abdestilliert, das Polymerisat mit Wasser auf einen Feststoffgehalt von 60 Gew.-% verdünnt und durch Zugabe von 50 %iger wäßriger Natronlauge auf einen pH-Wert von 6,7 eingestellt. Die Viskosität der wäßrigen Polymerlösung betrug 1275 mPas bei 24°C. Das Copolymerisat hatte ein Molgewicht (Gewichtsmittel) von 22.000 und einen K-Wert von 26.

### Beispiele 6 bis 10

Analog Beispiel 1 jedoch zusätzlich in Gegenwart der in Tabelle 2 angegebenen Regler wurden gemäß folgender Tabelle jeweils Polymerisationen des Esters 1 durchgeführt. Durch Verdünnen der Polymerschmelzen mit Wasser und Neutralisieren mit 50 %iger wäßriger Natronlauge stellte man gebrauchsfertige 60 %ige Polymerlösungen her.

**Tabelle 2**

| | Regler | Tert. Butylperoctoat | Mw | K-Wert |
|---|---|---|---|---|
| Beispiel 6 | 50 g 50 %ige wäßrige hypophosphorige Säure | 43 g | 34.000 | 32 |
| Beispiel 7 | 32 g Mercaptoethanol | 21 g | 24.000 | 25 |
| Beispiel 8 | 48 g Mercaptopropionsäure | 43 g | 29.000 | 32 |
| Beispiel 9 | 30 g Dodecylmercaptan | 35 g | 20.000 | 25 |
| Beispiel 10 | 40 g Trimethylphosphit | 25 g | 31.000 | 33 |

Die gebrauchsfertigen Polymerisatlösungen sind als Dispergiermittel geeignet, insbesondere als Verflüssiger für Beton.

## Patentansprüche

1. Verfahren zur Herstellung von wasserlöslichen Polymerisaten, die Polyalkylenglykolether-Seitenketten enthalten und Molmassen von 15 000 bis 65 000 haben, durch Lösungspolymerisation von Estern aus ethylenisch ungesättigten Carbonsäuren und einseitig endgruppenverschlossenen Polyalkylenglykolen gegebenenfalls zusammen mit anderen Monomeren in mindestens einem Kohlenwasserstoff in Gegenwart von Radikale bildenden Polymerisationsinitiatoren und gegebenenfalls Polymerisationsreglern bei Temperaturen bis zu 200°C, Entfernen des bei der Lösungspolymerisation verwendeten Lösemittels und Lösen der Polymerisate in Wasser zu 50 bis 80 gew.-%igen Lösungen, wobei man Säuregruppen enthaltende Polymerisate gegebenenfalls neutralisiert, **dadurch gekennzeichnet, daß** die Konzentration der Monomeren in den Kohlenwasserstoffen 70 bis 95 Gew.-% beträgt.

2. Verfahren nach Anspruch 1, **dadurch gekennzeichnet, daß** die Konzentration der Monomeren 80 bis 90 Gew.-% beträgt.

3. Verfahren nach Anspruch 1 oder 2, **dadurch gekennzeichnet, daß**
(a) Ester der Formel 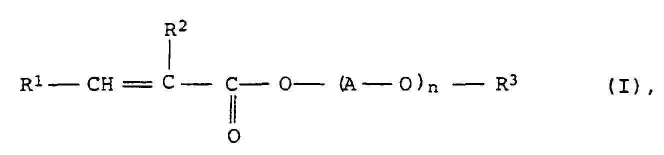 in der
R¹,R² gleich oder verschieden sind und H oder CH₃ bedeuten
A eine Alkylengruppe mit 2 bis 4 C-Atomen oder - CH₂-CH₂-CH₂-CH₂- ist,
R³ für C₁- bis C₅₀-Alkyl oder C₁- bis C₁₈-Alkylphenyl steht und
n eine Zahl von 2 bis 300 ist,
mit
(b) mindestens einer monoethylenisch ungesättigten Carbonsäure oder deren Salzen copolymerisiert.

4. Verfahren nach Anspruch 3, **dadurch gekennzeichnet, daß** man die Monomeren (a) und (b) im Gewichtsverhältnis 98 : 2 bis 2 : 98 copolymerisiert.

5. Verfahren nach einem der Ansprüche 1 bis 4, **dadurch gekennzeichnet, daß** man
(a) Acrylsäure- oder Methacrylsäureester von einseitig mit C1- bis C4-Alkyl endgruppenverschlossenen Polyalkylenglykolen mit Molmassen von 200 bis 10.000
mit
(b) Acrylsäure und/oder Methacrylsäure copolymerisiert.

6. Verfahren nach einem der Ansprüche 1 bis 5, **dadurch gekennzeichnet, daß** man
(a) Ester aus Methacrylsäure und Methylpolyethylenglykol mit Molmassen von 350 bis 10.000
mit
(b) Methacrylsäure copolymerisiert.

7. Verfahren nach einem der Ansprüche 1 bis 6, **dadurch gekennzeichnet, daß** man die Copolymerisation in Gegenwart von 0,1 bis 10 Gew.-% eines Polymerisationsreglers durchführt.

8. Verfahren nach Anspruch 7, **dadurch gekennzeichnet, daß** man als Polymerisationsregler Natriumhydrogensulfit, Natriumdisulfit, Natriumthiosulfat, Natriumhypophosphit, posphorige Säure, Mercaptoethanol, Dodecylmercaptan, Mercaptopropionsäure, Mercaptoessigsäure, Alkalimetallsalze der genannten Säuren oder Mischungen der Polymerisationsregler einsetzt.

9. Verfahren nach einem der Ansprüche 1 bis 8, **dadurch gekennzeichnet, daß** man die Säuregruppen der Polymerisate mit Basen zumindest teilweise neutralisiert.

## Claims

1. A process for the preparation of water-soluble polymers containing polyalkylene glycol ether side chains and having molecular weights of from 15,000 to 65,000 by solution polymerization of esters of ethylenically unsaturated carboxylic acids and polyalkylene glycols which are masked on the end groups at one end, if desired together with other monomers in at least one hydrocarbon in the presence of free-radical-forming polymerization initiators and, if desired, polymerization regulators at temperatures of up to 200°C, removal of the solvent used in the solution polymerization, and dissolution of the polymers in water to give from 50 to 80% strength by weight solutions, with polymers containing acid groups being neutralized if desired, wherein the concentration of the monomers in the hydrocarbons is from 70 to 95% by weight.

2. A process as claimed in claim 1, wherein the concentration of the monomers is from 80 to 90% by weight.

3. A process as claimed in claim 1 or 2, wherein
(a) esters of the formula 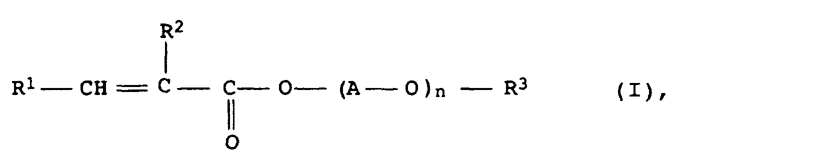 in which
R¹ and R² are identical or different and are H or CH₃,
A is an alkylene group having from 2 to 4 carbon atoms or is -CH₂-CH₂-CH₂-CH₂-,
R³ is C₁- to C₅₀-alkyl or C₁- to C₁₈-alkylphenyl, and
n is a number from 2 to 300,
are copolymerized with
(b) at least one monoethylenically unsaturated carboxylic acid or salts thereof.

4. A process as claimed in claim 3, wherein the monomers (a) and (b) are copolymerized in a weight ratio of from 98 : 2 to 2 : 98.

5. A process as claimed in any one of claims 1 to 4, wherein
(a) acrylic acid esters or methacrylic acid esters of polyalkylene glycols which are masked on the end groups at one end by C1- to C4-alkyl and have molecular weights of from 200 to 10,000
are copolymerized with
(b) acrylic acid and/or methacrylic acid.

6. A process as claimed in any one of claims 1 to 5, wherein
(a) esters of methacrylic acid and methylpolyethylene glycol having molecular weights of from 350 to 10,000
are copolymerized with
(b) methacrylic acid.

7. A process as claimed in any one of claims 1 to 6, wherein the copolymerization is carried out in the presence of from 0.1 to 10% by weight of a polymerization regulator.

8. A process as claimed in claim 7, wherein the polymerization regulator employed is sodium hydrogensulfite, sodium bisulfite, sodium thiosulfate, sodium hypophosphite, phosphorous acid, mercaptoethanol, dodecyl mercaptan, mercaptopropionic acid, mercaptoacetic acid, alkali metal salts of the said acids or mixtures of the polymerization regulators.

9. A process as claimed in any one of claims 1 to 8, wherein at least some of the acid groups in the polymers are neutralized using bases.

## Revendications

1. Procédé de préparation de polymères hydrosolubles, qui contiennent des chaînes latérales éther de polyalkylèneglycol et qui présentent des masses moléculaires allant de 15 000 à 65 000, au moyen d'une polymérisation en solution d'esters d'acides carboxyliques à insaturation éthylénique et de polyalkylèneglycols coiffés unilatéralement par des groupes terminaux, éventuellement conjointement avec d'autres monomères, dans au moins un hydrocarbure en présence d'amorceurs de polymérisation formant des radicaux et éventuellement de régulateurs de polymérisation à des températures allant jusqu'à 200°C, de l'élimination du solvant utilisé dans la polymérisation en solution et de la dissolution des polymères dans l'eau pour former des solutions de 50% à 80% en poids, dans lequel on neutralise éventuellement les polymères contenant des groupes acides, **caractérisé en ce que** la concentration en monomères dans les hydrocarbures va de 70% à 95% en poids.

2. Procédé selon la revendication 1, **caractérisé en ce que** la concentration en monomères va de 80% à 90% en poids.

3. Procédé selon la revendication 1 ou 2, **caractérisé en ce que** l'on copolymérise
(a) des esters de formule 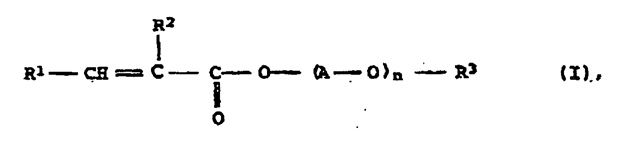 dans laquelle
R¹, R² sont identiques ou différents et représentent un atome de H ou CH₃
A représente un groupe alkylène possédant 2 à 4 atomes de C ou un groupe -CH₂-CH₂-CH₂-CH₂-
R³ représente un groupe alkyle en C₁ à C₅₀ ou un groupe alkylphényle en C₁ à C₁₈ et
n représente un nombre allant de 2 à 300, avec
(b) au moins un acide carboxylique à insaturation monoéthylénique ou ses sels.

4. Procédé selon la revendication 3, **caractérisé en ce que** l'on copolymérise les monomères (a) et (b) dans un rapport pondéral allant de 98:2 à 2:98.

5. Procédé selon l'une quelconque des revendications 1 à 4, **caractérisé en ce que** l'on copolymérise
(a) un acrylate ou un méthacrylate de polyalkylèneglycols coiffés unilatéralement par des groupes terminaux alkyle en C₁ à C₄ présentant des masses moléculaires allant de 200 à 10 000
avec
(b) un acide acrylique et/ou un acide méthacrylique.

6. Procédé selon l'une quelconque des revendications 1 à 5, **caractérisé en ce que** l'on copolymérise
(a) un ester d'acide méthacrylique et de méthylpolyéthylèneglycol présentant des masses moléculaires allant de 350 à 10 000
avec
(b) de l'acide méthacrylique.

7. Procédé selon l'une quelconque des revendications 1 à 6, **caractérisé en ce que** l'on réalise la copolymérisation en présence de 0,1% à 10% en poids d'un régulateur de polymérisation.

8. Procédé selon la revendication 7, **caractérisé en ce que** l'on met en oeuvre, en tant que régulateur de polymérisation, l'hydrogénosulfite de sodium, le disulfite de sodium, le thiosulfate de sodium, l'hypophosphite de sodium, l'acide phosphorique, le mercaptoéthanol, le dodécylmercaptan, l'acide mercaptopropionique, l'acide mercaptoacétique, les sels de métaux alcalins des acides cités ou des mélanges de régulateurs de polymérisation.

9. Procédé selon l'une quelconque des revendications 1 à 8, **caractérisé en ce que** l'on neutralise au moins en partie les groupes acides des polymères à l'aide de bases.
